Europäisches Patentamt

European Patent Office

Office européen des brevets

(11) Veröffentlichungsnummer: 0 146 956
A2

## (12) EUROPÄISCHE PATENTANMELDUNG

(21) Anmeldenummer: 84116138.3

(22) Anmeldetag: 21.12.84

(51) Int. Cl.⁴: G 02 B 6/28
G 02 B 27/10

(30) Priorität: 22.12.83 DE 3346364

(43) Veröffentlichungstag der Anmeldung:
03.07.85 Patentblatt 85/27

(84) Benannte Vertragsstaaten:
DE FR GB NL

(71) Anmelder: International Standard Electric Corporation
320 Park Avenue
New York New York 10022(US)

(84) Benannte Vertragsstaaten:
FR GB NL

(71) Anmelder: Standard Elektrik Lorenz Aktiengesellschaft
Hellmuth-Hirth-Strasse 42
D-7000 Stuttgart 40(DE)

(84) Benannte Vertragsstaaten:
DE

(72) Erfinder: Köster, Wilhelm
Gerokstrasse 1
D-7147 Nussdorf(DE)

(72) Erfinder: Vollmer, Theodor
Hölderlinstrasse 53
D-7000 Stuttgart 1(DE)

(74) Vertreter: Schmidt, Werner, Dipl.-Phys. et al,
c/o Standard Elektrik Lorenz AG Patent- und
Lizenzwesen Kurze Strasse 8 Postfach 300 929
D-7000 Stuttgart 30(DE)

(54) Optischer Leistungsteiler.

(57) Auf der Oberseite (15) und der Unterseite (16) eines optisch durchlässigen Plättchens (6) sind halbkugelförmige Linsen (7-14) aufgebracht. Zwischen einem Teil der Linsen (8, 10, 11) und dem Plättchen sind teildurchlässige Schichten (12, 13, 14) vorhanden, die jeweils einen Teil des auf sie auftreffenden Lichtstrahls durchlassen und den Rest reflektieren.

EP 0 146 956 A2

W.Köster 7-2


W.Köster-Th.Vollmer 7-2

Optischer Leistungsteiler

Die Erfindung geht aus von einem optischen Leistungsteiler.
Solche Leistungsteiler sind an sich bekannt.

Aufgabe der Erfindung ist es, einen einfach zu realisierenden Leistungsteiler anzugeben.

Die Lösung dieser Aufgabe erfolgt mit den im Anspruch 1
angegebenen Mitteln. Eine vorteilhafte Weiterbildung
ist dem Unteranspruch zu entnehmen.

Der neue Leistungsteiler weist nur geringe Verluste auf.
Er ist sehr flexibel hinsichtlich der Ankopplung an Lichtwellenleiter, Sender und Empfänger und leicht an ein gewünschtes z anpaßbar, wobei z die Anzahl der miteinander
zu vereinigenden oder der aus einem Lichtstrahl zu erzeugenden Teilstrahlen ist. Der neue Leistungsteiler ist
einfach herstellbar.

Der neue Leistungsteiler ist nicht nur dazu geeignet,
einen Lichtstrahl in Teilstrahlen mit gleichen oder unterschiedlichen Intensitäten aufzuteilen, sondern es können
mit ihm auch mehrere Teilstrahlen zu einem einzigen Lichtstrahl zusammengefaßt werden. Bei dieser Anwendung treten

ZT/P1-Sm/R
19.12.1983

W.Köster 7-2

zwar an den teildurchlässigen Schichten Verluste auf, welche jedoch für zahlreiche Anwendungsfälle in Kauf genommen werden können.

Die Erfindung wird anhand einer Zeichnung, die ein Querschnitt durch ein Ausführungsbeispiel ist, beispielsweise näher erläutert.

Leistungsteiler sind reziproke Bauelemente, d. h. sie können sowohl zur Aufteilung eines Lichtstrahls in Teilstrahlen als auch zur Vereinigung mehrerer Teilstrahlen eingesetzt werden. Die Anschlüsse des Leistungsteilers sind je nach Betriebsart Eingänge oder Ausgänge. Die Beschreibung erfolgt für die Aufteilung eines Lichtstrahls in Teilstrahlen.

Der neue Leistungsteiler besteht aus einem als Plättchen realisierten Substrat (6) mit der Dicke d aus einem optisch durchlässigen Material. Auf dieses Plättchen sind auf seiner Ober- und Unterseite 15, 16 mehrere halbkugelförmige Linsen 8, 10, 11, deren ebene Flächen teildurchlässige Schichten 12, 13, 14 aufweisen, aufgebracht. Außerdem sind noch zwei weitere halbkugelförmige Linsen 7, 9 aufgebracht, die keine teildurchlässigen Schichten aufweisen.

Über die erste 7 der beiden Linsen wird der aufzuteilende Lichtstrahl dem Leistungsteiler zugeführt und über die zweite 9 der beiden Linsen wird der letzte Teilstrahl ausgekoppelt. Die Anschlußstellen 1, 2, 3, 4, an denen die Teilstrahlen ausgekoppelt werden, sind die Auskoppelstellen. Der Anschluß 5 ist die Einkoppelstelle.

W.Köster 7-2

Sinngemäß sind die Einkoppelstelle und Auskoppelstellen beim reziproken Betrieb des Leistungsteilers die Auskoppelstelle bzw. die Einkoppelstellen.
Der aufzuteilende Lichtstrahl wird dem Leistungsteiler unter einem Winkel von 45° gegenüber der Oberfläche 15 des Leistungsteilers zugeführt 5, beispielsweise über einen (nicht dargestellten) Lichtwellenleiter. Der Abstand des Lichtwellenleiters vom Brennpunkt der Linse 7 ist so gewählt, daß die Linse paralleles Licht bildet. Entsprechend sind die Abstände der (nicht dargestellten) Lichtwellenleiter, die die Teilstrahlen weiterleiten, von den Linsen 8, 9, 10, 11 an den Auskoppelstellen 1, 2, 3, 4 gewählt. Sie fokussieren das ausgekoppelte parallele Licht auf die Wellenleiter.

Bei dem Ausführungsbeispiel weisen das Material des Plättchens 6 und der Linsen 7, 8, 9, 10, 11 denselben Brechungsindex auf. Der unter einem Winkel von 45° auf den Leistungsteiler auftreffende Lichtstrahl dringt daher auch unter einem Winkel von 45° gegen die Plättchenoberfläche 15 in das Plättchen 6 ein. Er trifft auf der anderen Plättchenseite 16 auf die teildurchlässige Schicht 12 der Linse 10. Diese Schicht läßt nur einen Teil des auf sie auftreffenden Lichtstrahls durch und reflektiert den restlichen Teil des Lichtstrahls. Der so erzeugte Teilstrahl wird an der Auskoppelstelle 1 ausgekoppelt.

Der verbleibende Lichtstrahl trifft nach seiner Reflexion an der teildurchlässigen Schicht 12 auf die teildurchlässige Schicht 13 der Linse 8 auf der anderen Seite des Plättchens. Diese Schicht läßt wiederum einen Teil dieses Lichtstrahls durch und reflektiert den restlichen zu der

W.Köster 7-2

teildurchlässigen Schicht 14 der Linse 11. An den Stellen
2 (teildurchlässige Schicht 13) und 3 (teildurchlässige
Schicht 14) werden also wiederum Teilstrahlen ausgekoppelt
Von der teildurchlässigen Schicht 14 wird der nicht ausgekoppelte Teilstrahl zur Auskoppelstelle 4 reflektiert. Dieses ist
der letzte der gewünschten Teilstrahlen und deshalb ist
an der Auskoppelstelle 4 keine teildurchlässige Schicht
erforderlich. Die Anzahl der Auskoppelstellen ist gleich
der gewünschten Anzahl von Teilstrahlen.

Das Licht breitet sich in dem Plättchen 6 zwischen den
beiden Oberflächen 15 und 16 zick-zack-förmig von Einkoppelstelle zu Auskoppelstelle und von Auskoppelstelle zu Auskoppelstelle aus. Die Dicke d der Schicht ist bestimmt durch den gewünschten
Strahlengang im Plättchen und dem Abstand a der Mittelpunkte zweier benachbarter Linsen.

Es ist für das Reflexions/Durchlassverhalten an den teildurchlässigen Schichten von Vorteil, wenn der Winkel
zwischen der Ausbreitungsrichtung der Lichtstrahlen im
Plättchen und den Ober/Unterseiten des Plättchens 45° ist.
Dies hat jedoch zur Folge, daß die Teilstrahlen ebenfalls
unter diesem Winkel von dem Plättchen ausgehen (Leistungsteiler) oder (bei der Kombination von Teilstrahlen) auf
dieses auftreffen müssen. Diese Bedingung kann jedoch
nicht immer erfüllt werden.

Andere Winkel zur Ein/Auskopplung der Teilstrahlen werden
möglich, wenn die Material des Plättchens und der halbkugelförmigen Linsen unterschiedliche Brechungsindizes
aufweisen. Die beiden Brechungsindizes müssen so gewählt

W.Köster 7-2

werden, daß die Brechung beim Übergang zwischen Linse und Plättchen so erfolgt, daß der Strahlengang im Plättchen mit den Begrenzungsflächen 15, 16 des Plättchens Winkel von 45° bilden.

Der geringste Raumbedarf ist dann gegeben, wenn die halbkugelförmigen Linsen aneinander anstoßen. Es ist dann $d = {}^a/2$; mögliche Zahlenwerte: a = 3 mm; d = 1,5 mm.

Es ist von Vorteil, die Linsen mit einer Antireflexschicht zu bedampfen, da dann die Reflexionsverluste an den Linsenoberflächen reduziert werden. Der Leistungsteiler ist so ausgestaltet, daß an ihn sowohl Lichtwellenleiter (z. B. Lichtleitfasern) oder aber direkt Sende- oder Empfangsdioden angekoppelt werden können. Sendeelemente, die polarisiertes Licht abgeben (z. B. Laserdioden) werden bezüglich der Polarisationsrichtung des von ihnen abgegebenen Lichts so angeordnet, daß die Dämpfung des Lichts im Leistungsteiler minimal wird. Gleiches gilt sinngemäß für polarisationsempfindliche Empfängerelemente. Die Durchmesser der Kerne der Lichtleitfasern, die das Licht dem Leistungsteiler zuführen oder von diesem weiterleiten, werden vorzugsweise so gewählt, daß die Durchmesser der "weiterleitenden" Lichtleitfaserkerne größer als die Durchmesser der "zuführenden" Lichtleitfaserkerne sind. Weiterhin werden die Abstände der Lichtleitfasern von den Linsen so gewählt, daß im Plättchen paralleles Licht vorhanden ist.

Bei dem Ausführungsbeispiel sind vier Auskoppelstellen vorhanden. Wenn der Lichtstrahl mit der Intensität $J_0$ in vier Teilstrahlen mit den Intensitäten $J_1$, $J_2$, $J_3$ und $J_4$ mit $J_1 = J_2 = J_3 = J_4$ aufgeteilt werden, dann müssen die

W.Köster 7-2

teildurchlässigen Schichten die nachfolgend angegebenen Anteile der auf sie auftreffenden Lichtstrahlen durchlassen:

$$\begin{aligned}
&\text{Schicht 12:} \quad 1/4 \\
&\text{Schicht 13:} \quad 1/3 \\
&\text{Schicht 14:} \quad 1/2.
\end{aligned}$$

Ist ein Leistungsteiler mit z Auskoppelstellen (und somit (z -1) teildurchlässigen Schichten) vorhanden, dann ist die Durchlässigkeit wie folgt:

$$\begin{aligned}
&\text{erste Schicht :} \quad 1/z \\
&\text{zweite Schicht:} \quad 1/z-1 \\
&\qquad\qquad \cdot \qquad\qquad\quad \cdot \\
&\qquad\qquad \cdot \qquad\qquad\quad \cdot \\
&\qquad\qquad \cdot \qquad\qquad\quad \cdot \\
&\text{(z-1)te Schicht:} \quad 1/2
\end{aligned}$$

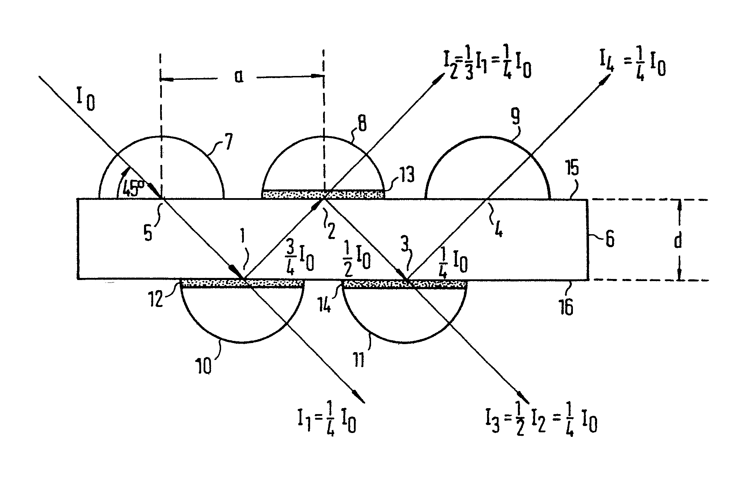

In der Zeichnung sind jeweils die Intensitäten der durchgelassenen der reflektierten Strahlen angegeben.

Es wurde oben davon ausgegangen, daß der Lichtstrahl in Teilstrahlen gleicher Intensität aufgeteilt wird. Dies ist jedoch nicht notwendig, sondern es ist durch geeignete Wahl des Durchlaßverhaltens der teildurchlässigen Schichten jede gewünschte Intensitätsverteilung möglich.

Die reziproke Verwendung des Strahlungsteilers zur Kombination der Teilstrahlen wird hier nicht erläutert, da es fachmännisches Wissen ist, den Leistungsteiler sinngemäß einzusetzen, wenn der Leistungsteiler und seine Funktionsweise an sich bekannt sind.

0146956

W.Köster-Th.Vollmer 7-2

Patentansprüche

1. Optischer Leistungsteiler, d a d u r c h   g e k e n n -
z e i c h n e t, daß ein Substrat (6) aus einem optisch
durchlässigen Material mit zwei zueinander parallelen
Flächen (15, 16) vorgesehen ist, daß auf den beiden Flächen
eine Einkoppelstelle und z Auskoppelstellen (1, 2, 3, 4) vorgesehen sind,
daß zwischen mindestens z-1 Auskoppelstellen (1, 2, 3)
und dem Substrat (6) teildurchlässige Schichten (12, 13, 14)
vorhanden sind, die jeweils einen unterschiedlichen Teil
des auf sie auftreffenden Lichts reflektieren und den
anderen Teil durchlassen, und daß die Lagen der Einkoppelstelle und der
Auskoppelstellen auf dem Substrat so gewählt sind, daß der Strahlengang des Lichts in dem Substrat zick-zack-förmig von Anschlußstelle
zu Anschlußstelle führt.

2. Optischer Leistungsteiler nach Anspruch 1, dadurch
gekennzeichnet, daß zur gleichmäßigen Aufteilung des einfallenden Lichtstrahls auf die z Auskoppelstellen die
ersten z-1 Auskoppelstellen jeweils den Teil des auf sie
auftreffenden Lichtstrahls, der gleich dem Kehrwert ihrer
Ordnungszahl ist, durchlassen und den Rest reflektieren,
und daß an der z-ten Auskoppelstelle nahezu keine Reflexion
erfolgt.

ZT/P1-Sm/R
19.12.1983

0146956

W. Köster 7-2
9 . 2 . 84